# EUROPÄISCHE PATENTSCHRIFT

(11) **EP 2 772 856 B1**
(45) Veröffentlichungstag und Bekanntmachung des Hinweises auf die Patenterteilung: **12.04.2017**
(21) Anmeldenummer: 14156181.1
(22) Anmeldetag: 21.02.2014
(51) Int. Cl.: G06F 9/48, G06F 21/62

(54) **Verfahren zum Ausführen von Tasks auf einem Produktions-Computersystem sowie Datenverarbeitungssystem**
Method for performing tasks on a production computer system and data processing system
Procédé de réalisation de tâches sur un système informatique de production et système de traitement de données

(30) Priorität: 27.02.2013 DE 102013101954; 06.03.2013 DE 102013102229
(43) Veröffentlichungstag der Anmeldung: 03.09.2014
(73) Patentinhaber: Fujitsu Technology Solutions Intellectual Property GmbH, 80807 München (DE)
(72) Erfinder: Claes, Heinz-Josef, 61130 Nidderau (DE)
(74) Vertreter: Epping - Hermann - Fischer

(56) Entgegenhaltungen:
- Ken Slonneger: "XML-Rpc", , 1. Januar 2006 (2006-01-01), Seiten 1-40, XP002723230, Gefunden im Internet: URL:http://homepage.cs.uiowa.edu/~slonnegr /xml/10.XML-RPC.pdf [gefunden am 2014-04-10]
- Oliver Thomas Bethge: "Methoden zur Unterbindung einer Kommunikation zwischen zwei Rechnern", , 1. Januar 2000 (2000-01-01), Seiten 1-48, XP002723231, Gefunden im Internet: URL:http://www.ruhr-uni-bochum.de/dv/studi enarbeiten/s282/s282.pdf [gefunden am 2014-04-10]
- wikipedia: "Port(Protokoll)", , 11. Januar 2012 (2012-01-11), XP002723232, Gefunden im Internet: URL:http://de.wikipedia.org/wiki/Port_(Pro tokoll) [gefunden am 2014-04-10]
- Walter Glenn, tony Northrup: "Einrichten und Verwalten von Benutzerkonten", , 1. Januar 2005 (2005-01-01), Seiten 321-329, XP002723233, Gefunden im Internet: URL:http://www.microsoft-press.de/chapter. asp?cnt=getchapter&id=ms-975.pdf [gefunden am 2014-04-10]
- VLADISLAV PERELMAN ET AL: "Flow signatures of popular applications", INTEGRATED NETWORK MANAGEMENT (IM), 2011 IFIP/IEEE INTERNATIONAL SYMPOSIUM ON, IEEE, 23 May 2011 (2011-05-23), pages 9-16, XP032035456, DOI: 10.1109/INM.2011.5990668 ISBN: 978-1-4244-9219-0
- Anonymous: "File transfer - Wikipedia, the free encyclopedia", , 23 May 2012 (2012-05-23), XP055226723, Retrieved from the Internet: URL:https://web.archive.org/web/2012052318 0012/http://en.wikipedia.org/wiki/File_tra nsfer [retrieved on 2015-11-09]
- ROGER DEBRY IBM CORPORATION T HASTINGS XEROX CORPORATION R HERRIOT SUN MICROSYSTEMS SCOTT ISAACSON NOVELL ET AL: "Internet Printing Protocol - IPP/1.0; draft-isaacson-ipp-info-00.txt", 1 November 1996 (1996-11-01), 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, XP015030292, ISSN: 0000-0004 * Seite 19, section 5.2, letzter Paragraph * * Seite 26,section 5.4.4 *
- Martin Krzywinski: "PORTKNOCKING - A system for stealthy authentication across closed ports. : ABOUT : summary", , 3 February 2013 (2013-02-03), XP055259195, Retrieved from the Internet: URL:http://web.archive.org/web/20130203180 934/http://www.portknocking.org/ [retrieved on 2016-03-17]
- Anonymous: "Secure copy - Wikipedia, the free encyclopedia", , 31 January 2013 (2013-01-31), XP055259362, Retrieved from the Internet: URL:https://web.archive.org/web/2013013120 3747/http://en.wikipedia.org/wiki/Secure_c opy [retrieved on 2016-03-17]

## Beschreibung

Die Erfindung betrifft sowohl ein Verfahren zum Ausführen von Tasks auf einem Produktions-Computersystem als auch ein Datenverarbeitungssystem mit zumindest einem derartigen Produktions-Computersystem.

In verteilten Rechnernetzen (Computersysteme, insbesondere Server, die über Datenverbindungen miteinander kommunizieren) verfügt das Bedien- bzw. Wartungspersonal (so genannte Operator oder Administratoren) über Zugriffsmöglichkeiten (zum Beispiel auf die Hardware der einzelnen Computersysteme) und über Rechte (zum Beispiel Zugriffsrechte auf Software, Daten, Dateien). Insbesondere in Rechnernetzen, welche Server-Client-Topologien umfassen, sind umfangreiche Administrationsaufgaben notwendig. So ist zum Beispiel ein Zugriff auf einzelne Computersysteme erforderlich, um bestimmte Aktionen (sogenannte Tasks) auszuführen. Derartige Tasks können zum Beispiel einen Neustart einer Anwendung, Backup- bzw. Wiederherstellungsprozesse oder einen Zugriff auf eine korrupte Datenbank betreffen. Dabei sind die genannten Personen unter Umständen in der Lage, (vertrauliche) Daten auf den betriebenen Computersystemen zu lesen. Ein Zugriff von Administratoren oder sonstigen Personen auf Daten kann unter dem Gesichtspunkt des Datenschutzes jedoch problematisch sein.

Eine herkömmliche Server-Client-Topologie zum Austausch von bestimmten Anweisungen eines Clients an einen Server ist aus dem Internet-Dokument "XML-Rpc" (abrufbar über URL: http://homepage.cs.uiowa.edu/-slonnegr/xml/10.XML-RPC.pdf) bekannt. Hierbei stellt der Server einen Dienst (http) an einem geöffneten Netzwerk-Port zur Verfügung, um Anweisungen über XML-RPC (remote procedure call) vom Client zu erhalten. Dadurch können bestimmte Prozesse im Server durchgeführt werden, die anschließend dem Client als Antwort des Servers zurückgegeben werden. Die Server-Client-Topologie gemäß der genannten Offenbarung hat den gravierenden Nachteil, dass der Server aufgrund des an einem oder mehreren geöffneten Ports zur Verfügung gestellten Dienstes (XML-RPC über http) von außen angreifbar ist, so dass der Server in seiner Funktionsweise manipulierbar ist und unter Umständen ein unbefugter Zugriff auf geschützte (z.B. vertrauliche) Daten möglich ist.

Übliche Herangehensweisen zur Erhöhung des Datenschutzes sind Vorschriften (Prozesse, die eingehalten werden sollen) und Regeln (Gebote beziehungsweise Verbote). Insbesondere wird ein Zugriff auf vertrauliche Daten in einem Computersystem durch vordefinierte Zugriffsrechte eingeschränkt, sodass nur (vertrauenswürdige) Personen Zugriff auf die vertraulichen Daten haben, welche über die entsprechenden Rechte verfügen.

Derartige Ansätze zur Verbesserung des Datenschutzes sind zur Datensicherheit zwar förderlich, haben jedoch den Nachteil, dass sie keine zwingenden Maßnahmen darstellen, um einen Zugriff auf vertrauliche Daten zu unterbinden. So können Mitarbeiter (zum Beispiel Administratoren oder Operator) eines Dienste-Providers kriminell sein oder bestochen werden oder sich in einer Zwangslage befinden, sodass oben genannte Vorschriften und Regeln missbräuchlich umgangen werden.

Die Aufgabe der vorliegenden Erfindung besteht somit darin, den Schutz vor unerlaubtem Zugriff auf insbesondere vertrauliche Daten innerhalb eines Computersystems, welches die Daten als so genanntes Produktions-Computersystem verarbeitet und speichert, durch technische Maßnahmen zu verbessern und dennoch eine zufriedenstellende Administration des Produktions-Computersystems zu gewährleisten.

In einem ersten Aspekt wird diese Aufgabe durch ein Verfahren zum Ausführen von Tasks auf einem Produktions-Computersystem nach Anspruch 1 gelöst.

Das Verfahren umfasst die Schritte:
- Bereitstellen einer Konfigurationsmöglichkeit zum Konfigurieren vorgegebener Durchführungsparameter für einen Task eines Produktions-Computersystems durch ein Key-Computersystem,
- Erstellen wenigstens einer Task-Beschreibungsdatei im Key-Computersystem anhand konfigurierter Durchführungsparameter, wobei die Task-Beschreibungsdatei eine Beschreibung eines Tasks auf dem Produktions-Computersystem enthält,
- automatisiertes Übertragen der Task-Beschreibungsdatei vom Key-Computersystem auf ein Task-Computersystem und Hinterlegen der Task-Beschreibungsdatei im Task-Computersystem,
- Aufrufen der hinterlegten Task-Beschreibungsdatei im Task-Computersystem,
- automatisiertes Übertragen der Task-Beschreibungsdatei vom Task-Computersystem auf das Produktions-Computersystem,
- Überprüfen der Zugehörigkeit der Task-Beschreibungsdatei zu wenigstens einem auf dem Produktions-Computersystem hinterlegten Task durch das Produktions-Computersystem,
- Ausführen des zur Task-Beschreibungsdatei zugehörigen Tasks im Produktions-Computersystem anhand der Task-Beschreibungsdatei, falls das Überprüfen der Zugehörigkeit erfolgreich war,
wobei das Task-Computersystem offene Ports aufweist, sodass ein Zugriff eines Benutzers einer ersten Benutzergruppe auf das Task-Computersystem eingerichtet ist, und wobei das Produktions-Computersystem sämtliche für das Verfahren maßgeblichen Ports dauerhaft derart geschlossen hält, dass an diesen Ports keine Programme zum Zweck der Ansprechbarkeit von außen laufen und dadurch während der Durchführung der obigen Schritte in einem vorbestimmten Betriebszustand des Produktions-Computersystems ein Zugriff eines Benutzers der ersten Benutzergruppe auf das Produktions-Computersystem verhindert wird. Jedoch wird ein Prozess zum Übertragen der Task-Beschreibungsdatei vom Task-Computersystem an das Produktions-Computersystem auf Anweisung des Produktions-Computersystems gestartet und das Übertragen der Task-Beschreibungsdatei durch das Produktions-Computersystem veranlasst wird, wobei das Produktions-Computersystem den Austausch-Prozess steuert, und
wobei das Key-Computersystem vorbestimmte Zugriffsrechte und/oder Schlüssel von Benutzern einer zweiten Benutzergruppe verwaltet und ein Zugriff eines Benutzers der zweiten Benutzergruppe auf das Key-Computersystem eingerichtet ist, jedoch zumindest in einem vorbestimmten Betriebszustand des Key-Computersystems ein Zugriff eines Benutzers der ersten Benutzergruppe auf das Key-Computersystem verhindert wird.

Bei einem derartigen Verfahren wird (in einem vorbestimmten Betriebszustand) der herkömmliche Zugriff von Administratoren oder Servicepersonal (oder auch anderer User), welche Benutzer der ersten Benutzergruppe bilden können, auf das Produktions-Computersystem unterbunden. Somit erlaubt das Verfahren ein Unterbinden eines Zugriffs auf vertrauliche Daten, die im Produktions-Computersystem hinterlegt sind. Ein Administrator ist in diesem Fall nicht mehr in der Lage, sich mit herkömmlichen Mitteln am Produktions-Computersystem zu authentifizieren oder einzuloggen, zum Beispiel bei unixbasierten Systemen über einen Secure-Shell-(SSH-)Daemon, oder spezielle Aktionen auf dem Produktions-Computersystem selbst durchzuführen, zum Beispiel mittels eines herkömmlichen Backup-Tools ein Backup zurückzuspielen oder auf Datenbanken zuzugreifen. Es ist in diesem Fall lediglich ein Zugriff von Benutzern der ersten Benutzergruppe auf das Task-Computersystem erlaubt.

Da ein Administrator aber zur Erfüllung seiner Administrationsaufgaben in der Lage sein muss, bestimmte Aktionen auf dem Produktions-Computersystem auszulösen, ist erfindungsgemäß das oben erläuterte Verfahren vorgesehen.

Maßgeblich beteiligt sind ein Key-Computersystem, ein Task-Computersystem sowie ein Produktions-Computersystem. Das Task-Computersystem ist die Instanz, über die Benutzer der ersten Benutzergruppe, zum Beispiel Administratoren, vordefinierte Aktionen (Tasks) auf dem Produktions-Computersystem ausführen können. Das Task-Computersystem kann aus Sicht der Benutzer der ersten Benutzergruppe "offen" sein (z.B. offene Ports haben) und damit weniger gesichert sein als das Produktions-Computersystem, welches unter Umständen sämtliche Ports (dauerhaft) geschlossen hält. Auf dem Task-Computersystem können bestimmte Applikationen vorhanden sein für die Auswahl und Initiierung von Tasks auf dem Produktions-Computersystem.

Das Produktions-Computersystem ist das Ziel von Aktionen, die auf ihm ausgeführt werden können oder sollen. Hierbei kann beispielsweise zwischen nicht-datenschutzrelevanten Aktionen (zum Beispiel Neustart einer Anwendung) und datenschutzrelevanten Aktionen (zum Beispiel ein notwendiger Zugriff eines Datenbankadministrators im Falle einer korrupten Datenbank) unterschieden werden.

Kern des Verfahrens ist die systematische Trennung des Auslösens vorbestimmter Tasks durch Benutzer (Task-Computersystem) vom Speicher- bzw. Verarbeitungsort (Produktions-Computersystem), an welchem vertrauliche Daten vorliegen bzw. verarbeitet werden. Auf das Produktions-Computersystem kann ein Benutzer der ersten Benutzergruppe im Regel- oder Normalfall (vorbestimmter Betriebszustand) nicht mehr zugreifen. Er kann aber vom logisch/physisch entfernt liegenden Task-Computersystem aus bestimmte vordefinierte Tasks auf dem Produktions-Computersystem anweisen, welche unter bestimmten Bedingungen anschließend auf dem Produktions-Computersystem durchgeführt werden.

Hierzu werden auf dem Task-Computersystem so genannten Task-Beschreibungsdateien mit Benennung und Beschreibung der durchzuführenden, auf dem Produktions-Computersystem vordefinierten Tasks hinterlegt. Ein Benutzer der ersten Benutzergruppe kann die Task-Beschreibungsdateien selektieren, um zu einem definierten Zeitpunkt eine vorbestimmte Aktion auf dem Produktions-Computersystem auszulösen, welche zu einer vorbestimmten Task-Beschreibungsdatei auf dem Task-Computersystem zugehörig ist. Vorteilhaft ist einem Benutzer der ersten Benutzergruppe nur eine Auswahl, jedoch keine Bearbeitung und Veränderung einer Task-Beschreibungsdatei gestattet.

Zur Durchführung eines Tasks wählt ein Benutzer der ersten Benutzergruppe auf dem Task-Computersystem (zum Beispiel über eine hierfür vorgesehene grafische Benutzeroberfläche) einen auf dem Produktions-Computersystem vordefinierten Task aus einer auf dem Task-Computersystem vorliegenden Liste von Task-Beschreibungsdateien aus, die für das betreffende Produktions-Computersystem gültig ist. Hierdurch wird ein Prozess angestoßen, welcher die ausgewählte Task-Beschreibungsdatei im Task-Computersystem aufruft und automatisiert vom Task-Computersystem auf das Produktions-Computersystem überträgt. Bereits das automatisierte Übertragen der Task-Beschreibungsdatei vom Task-Computersystem auf das Produktions-Computersystem kann dabei so ausgestaltet sein, dass ein Benutzer der ersten. Benutzergruppe darauf keine Einflussmöglichkeiten hat und somit eine Gefahr von Manipulationen am Produktions-Computersystem bereits vor diesem Schritt ausgeschlossen ist.

Nach dem automatisierten Übertragen der Task-Beschreibungsdatei auf das Produktions-Computersystem wird im Produktions-Computersystem die Zugehörigkeit der Task-Beschreibungsdatei zu wenigstens einem auf dem Produktions-Computersystem hinterlegten und vordefinierten Task überprüft. Dazu kann der Inhalt der Task-Beschreibungsdatei auf dem Produktions-Computersystem mit seinem internen, für einen Benutzer der ersten Benutzergruppe nicht erreichbaren Datenbestand verifiziert werden. Manipulationen (sofern möglich) am Inhalt der Task-Beschreibungsdatei auf dem Task-Computersystem, zum Beispiel durch einen Benutzer der ersten Benutzergruppe, führen lediglich zu einer Fehlermeldung auf dem Produktions-Computersystem, welche zum Beispiel über ein Monitoring publiziert wird. Das Produktions-Computersystem überprüft also, ob die über die Task-Beschreibungsdateien definierten Tasks mit einem auf ihm selbst hinterlegten Task übereinstimmen und daher für das Produktions-Computersystem vorgesehen und erlaubt sind.

Wird ein entsprechender zur Task-Beschreibungsdatei zugehöriger Task im Produktions-Computersystem aufgefunden und ist eine Überprüfung der Task-Beschreibungsdatei und deren Inhalte positiv und erfolgreich, so kann dieser anschließend anhand der in der Task-Beschreibungsdatei hinterlegten Beschreibung entsprechend ausgeführt werden. Eine Rückmeldung erfolgt, sofern nicht anders vorgesehen, über ein Monitoring-Tool.

Bevorzugt ist bei dem erläuterten Verfahren zusätzlich zum Task-Computersystem und zum Produktions-Computersystem ein sogenanntes Key-Computersystem eingerichtet, das vorbestimmte Zugriffsrechte und/oder Schlüssel von Benutzern einer zweiten Benutzergruppe, welche sich von der ersten Benutzergruppe unterscheidet, verwaltet und eine Konfigurationsmöglichkeit zum Konfigurieren vorgegebener Durchführungsparameter für einen Task des Produktions-Computersystems bereitstellt.

Zusätzlich zum Task-Computersystem und zum Produktions-Computersystem ist somit auch ein Key-Computersystem in das Verfahren eingebunden. Das Key-Computersystem verwaltet Schlüssel und/oder Berechtigungen von Benutzern einer zweiten Benutzergruppe. Das Key-Computersystem kann somit nur noch von Personen erreicht, verwendet und bedient werden, denen eine bestimmte Rolle (zum Beispiel so genannter Security-Manager oder Key-Authority) zugeordnet ist. Diese Rolle ist unabhängig und separat von der Rolle eines Benutzers der ersten Benutzergruppe, der zum Beispiel als Administrator eingesetzt ist. Vorteilhaft kann das Key-Computersystem besonders gesichert und dezentral - physisch unerreichbar und über eine IP-Adresse nicht ansprechbar für Personen der ersten Benutzergruppe - lokalisiert sein.

Das Key-Computersystem wird bei dem Verfahren der hier erläuterten Art insbesondere dazu verwendet, Tasks, die auf dem Produktions-Computersystem ausgeführt werden, zu definieren beziehungsweise zu konfigurieren, sodass vorbestimmte Aktionen auf dem Produktions-Computersystem ausgelöst werden können. Insbesondere können Durchführungsparameter für Tasks festgelegt werden, auf deren Basis eine oder mehrere Task-Beschreibungsdateien im Key-Computersystem erstellt werden. Diese konfigurierten und erstellten Task-Beschreibungsdateien werden dann automatisiert vom Key-Computersystem auf das Task-Computersystem übertragen. Dieses automatisierte Übertragen kann derart ablaufen, dass das Key-Computersystem einen offenen Port des Task-Computersystems anspricht und die Task-Beschreibungsdateien entsprechend in vorbereiteten Verzeichnissen im Task-Computersystem ablegt. Vorteilhaft sind jedoch vorbestimmte Ports des Key-Computersystems (dauerhaft) geschlossen, sodass das Task-Computersystem auf das Key-Computersystem umgekehrt nicht zugreifen kann.

Zudem ist vorgesehen, dass ausschließlich ein vordefinierter Personenkreis einer zweiten Benutzergruppe, die sich von der ersten Benutzergruppe unterscheidet, Zugriff auf das Key-Computersystem hat. Auf das Task-Computersystem können, wie bereits erläutert, Benutzer der ersten Benutzergruppe zugreifen, um ein Ausführen von Tasks auf dem Produktions-Computersystem anhand der im Task-Computersystem hinterlegten Task-Beschreibungsdateien zu initiieren. Ein Verändern der Task-Beschreibungsdateien im Task-Computersystem durch einen Benutzer der ersten Benutzergruppe wird vorteilhaft verhindert. Ferner ist ein Zugriff eines Benutzers der ersten Benutzergruppe auf das Key-Computersystem zumindest in einem vorbestimmten Betriebszustand des Key-Computersystems vorteilhaft unterbunden. Das bedeutet, dass ein Benutzer der ersten Benutzergruppe keine Durchführungsparameter im Key-Computersystem konfigurieren kann. Auch auf diese Weise wird somit die Datensicherheit durch Trennen der Konfiguration von Task-Beschreibungsdateien und der bloßen Ausführung von Tasks auf dem Produktions-Computersystem vermittels der Task-Beschreibungsdateien auf zwei unterschiedliche Benutzergruppen aufgetrennt.

Insbesondere kann durch Verwendung des Key-Computersystems zwischen nicht-datenschutzrelevanten Aktionen und datenschutzrelevanten Aktionen unterschieden werden. Datenschutzrelevante Tasks, die die Sicherheit des Systems (Zugriffs- und Datenschutz) beeinträchtigen können, dürfen nur in besonderen (Ausnahme-)Fällen und/oder zeitlich begrenzt durchgeführt werden. Im Fall eines Tasks, der zum Beispiel nur in einem vorgegebenen Zeitraum durchgeführt werden darf, beispielsweise zwischen 10:00 Uhr und 10:15 Uhr vormittags an einem Datum DD.MM.YYYY, wird dieser Zeitraum durch einen Benutzer der zweiten Benutzergruppe, zum Beispiel einem Security-Manager, über das Key-Computersystem definiert. Ferner wird dieser Parameter durch geeignete Methoden vor späterer Manipulation gesichert (zum Beispiel durch Verschlüsselung/Signierung mit einem privaten Schlüssel des Key-Computersystems oder des jeweiligen Benutzers). Eine Information, welcher Task hierdurch zu welcher Zeit als ausführbar gekennzeichnet wird, kann dabei lesbar auch für andere Benutzergruppen zur Verfügung gestellt werden.

Dann wird eine Task-Beschreibungsdatei mit den vorkonfigurierten Parametern im Key-Computersystem erstellt und die erstellte Task-Beschreibungsdatei auf das Task-Computersystem transferiert. Anschließend kann ein Benutzer der ersten Benutzergruppe den entsprechenden Task, wie bereits erläutert, anzeigen, auswählen und aufrufen. Ein entsprechender Prozess zum automatisierten Übertragen der entsprechenden Task-Beschreibungsdatei vom Task-Computersystem auf das Produktions-Computersystem und ein schlussendliches Ausführen des zugehörigen Tasks im Produktions-Computersystem kann dann, wie bereits erläutert, durchgeführt werden. Insbesondere ist es vorteilhaft, wenn auch ein Benutzer der ersten Benutzergruppe nach Auswahl und Festlegen der Durchführung eines Tasks die zugehörige Task-Beschreibungsdatei mit einem privaten Schlüssel signiert. Dies erlaubt eine verbesserte Nachvollziehbarkeit im Prozess.

Der durch das Verfahren nach Anspruch 1 beschriebene Ablauf ermöglicht somit vorteilhaft die Durchführung einer durch einen Benutzer der ersten Benutzergruppe initiierten und auf dem Produktions-Computersystem vordefinierten Aktion, ohne dass ein Zugriff eines Benutzers der ersten Benutzergruppe auf das Produktions-Computersystem in einem vorbestimmten Betriebszustand vorgesehen ist. Auf dem Produktions-Computersystem sind somit keine Programme notwendig, die zum Zweck der Ansprechbarkeit von außen eingerichtet sind und eine potentielle Sicherheitslücke (zum Beispiel durch Buffer-Overflow) bilden.

Eine Task-Beschreibungsdatei unterscheidet sich auch grundlegend von einem reinen Kommando-Befehl eines Benutzers der ersten Benutzergruppe an ein Produktions-Computersystem, weil ein Kommando-Befehl zu dessen Auswertung auf Seiten des Produktions-Computersystems ein kontinuierlich laufendes, nach außen offenes und damit angreifbares Programm notwendig macht. Ein derartiges Programm entfällt jedoch beim vorliegenden Verfahren mangels eines Zugriffs eines Benutzers der ersten Benutzergruppe auf das Produktions-Computersystem.

Die Task-Beschreibungsdatei umfasst lediglich eine Beschreibung des im Produktions-Computersystem definierten Tasks, wobei keinerlei selbständig ausführbare Programmanteile oder Protokollbefehle in der Task-Beschreibungsdatei notwendig sind, die zu schadhaften Reaktionen des Produktions-Computersystems führen können. Die Task-Beschreibungsdatei wird auf das Produktions-Computersystem übertragen, wobei sämtliche nachfolgenden Schritte zum Ausführen des Tasks eingekapselt innerhalb des Produktions-Computersystems durchführbar sind, ohne dass ein Zugriff von außen notwendig ist. Ein Fehler in der Task-Beschreibungsdatei führt lediglich zu einer Fehlermeldung (Missmatch) im Produktions-Computersystem und gegebenenfalls zum sofortigen Abbruch des Verfahrens.

Ein Verhindern eines Zugriffs eines Benutzers der ersten Benutzergruppe auf das Produktions-Computersystem kann generell bedeuten, dass für den Benutzer das Produktions-Computersystem innerhalb eines Rechnernetzes zwar sichtbar und gegebenenfalls auch ansprechbar ist, jedoch ein Zugriffsschutz (zum Beispiel über eine Zugriffssteuereinheit im Produktions-Computersystem) vorgesehen ist, welche dem Benutzer keinen Login am Produktions-Computersystem ermöglicht.

Es ist jedoch auch denkbar, dass ein Zugriff des Benutzers der ersten Benutzergruppe auf das Produktions-Computersystem dadurch verhindert wird, dass das Produktions-Computersystem durch den Benutzer gar nicht angesprochen werden kann, weil es beispielsweise für den Benutzer im Rechnernetz gar nicht sichtbar ist. In diesem Fall ist das Produktions-Computersystem für den Benutzer der ersten Benutzergruppe physisch unerreichbar und beispielsweise über eine IP-Adresse nicht ansprechbar.

Durch das erläuterte Verfahren wird somit ein Zugriffsschutz auf unter Umständen vertrauliche Daten auf einem Produktions-Computersystem dadurch verbessert, dass nicht nur bestimmte Regeln und Vorschriften durch Benutzer eingehalten werden müssen, sondern durch technische Maßnahmen ein unmittelbarer Zugriff eines Benutzers auf Daten des Produktions-Computersystems schlichtweg unterbunden werden kann. Zur Ausführung von Administrationsaufgaben kann ein Benutzer dennoch einen Task auf dem Produktions-Computersystem über das Task-Computersystem auswählen und automatisiert initiieren. Das Auslösen von spontanen Aktionen, so genannten Ad-hoc-Tasks, auf einem Server oder Computersystem ist somit eventgesteuert durchführbar, was interaktive Abläufe zufriedenstellend ermöglicht.

Es ist denkbar, ein Zugriffsverbot auf das Produktions-Computersystem für bestimmte Benutzer dauerhaft einzurichten und/oder für bestimmte Benutzer in vorbestimmten Betriebszuständen des Produktions-Computersystems einzurichten. Im letzten Fall kann ein Zugriffsverbot z.B. in einem Regel- oder Normalbetrieb eingerichtet sein und in einem Ausnahmebetrieb, z.B. bei vorbestimmten notwendigen Maßnahmen (Zugriff auf korrupte Datenbank, etc.) aufgehoben sein.

Vorteilhaft umfasst das automatisierte Übertragen der Task-Beschreibungsdatei vom Task-Computersystem auf das Produktions-Computersystem die folgenden Schritte:
- Senden einer vorbestimmten Sequenz an Paket-Daten vom Task-Computersystem an das Produktions-Computersystem, wobei vorbestimmte Ports des Produktions-Computersystems geschlossen sind und wobei die Sequenz in einer vorbestimmten Reihenfolge einen oder mehrere vorbestimmte Ports des Produktions-Computersystems anspricht,
- Überprüfen der gesendeten Sequenz auf Übereinstimmung mit einer vordefinierten Sequenz im Produktions-Computersystem, sowie
- Starten des Prozesses zum Übertragen der Task-Beschreibungsdatei vom Task-Computersystem an das Produktions-Computersystem auf Anweisung des Produktions-Computersystems.

Diese zusätzlichen Verfahrensschritte haben den Vorteil, dass grundsätzlich sämtliche (für das Verfahren maßgebliche) Ports des Produktions-Computersystems dauerhaft geschlossen sind und einen Zugriff auf das Produktions-Computersystem von außen blockieren. Ein Prozess zum Übertragen der jeweiligen Task-Beschreibungsdatei (z.B. SCP) kann gestartet werden, nachdem eine vorbestimmte Sequenz an Paket-Daten an das Produktions-Computersystem gesendet wurde und falls die Sequenz mit einer vordefinierten Sequenz übereinstimmt.

Ein derartiges Verfahren ist auch unter dem Begriff "Port-Knocking" bekannt. Die vorgenannten Schritte können beispielsweise über einen so genannten Knock-Daemon, also ein Programm, welches Port-Knocking ermöglicht, durchgeführt werden. Der Knock-Daemon sitzt an den Ports des Produktions-Computersystems, überprüft die an das Produktions-Computersystem gesendete Sequenz von Paket-Daten und veranlasst gegebenenfalls ein gesteuertes Übertragen der entsprechenden Task-Beschreibungsdatei, wenn die gesendete Sequenz mit einer vordefinierten Sequenz übereinstimmt. Der oben beschriebene Ablauf ermöglicht somit das Übertragen/Kopieren der Task-Beschreibungsdatei vom Task-Computersystem an das Produktions-Computersystem, ohne dass das Produktions-Computersystem hierfür einen offenen Port mit einem ansprechbaren Programm laufen hat.

Alternativ oder ergänzend zum oben erläuterten Port-Knocking ist auch denkbar, dass das Produktions-Computersystem von sich aus in regelmäßigen Abständen beim Task-Computersystem anfragt (Polling), ob eine oder mehrere auszutauschende Task-Beschreibungsdateien vorliegen. Ist dies der Fall, kann eine entsprechende Übertragung der Task-Beschreibungsdatei vom Task-Computersystem an das Produktions-Computersystem initiiert werden.

Das Übertragen der Task-Beschreibungsdatei vom Task-Computersystem an das Produktions-Computersystem wird vorteilhaft durch das Produktions-Computersystem veranlasst. Dies hat den Vorteil, dass ein Übertragen der Task-Beschreibungsdatei auf Anweisung des Produktions-Computersystems erfolgt (z.B. über SCP), wobei das Produktions-Computersystem beispielsweise den Austausch-Prozess steuern kann. Das Produktions-Computersystem verhält sich dabei nicht passiv abwartend, bis die Task-Beschreibungsdatei gesendet wird.

Vorteilhaft wird die Task-Beschreibungsdatei vor dem Übertragen an das Produktions-Computersystem in ein vordefiniertes Austausch-Verzeichnis innerhalb der Verzeichnisstruktur des Task-Computersystems abgelegt. Die Task-Beschreibungsdatei kann beispielsweise in das Austausch-Verzeichnis kopiert werden, sodass sie für einen erneuten Aufruf zu einem späteren Zeitpunkt (wenn der zugehörige Task erneut durchgeführt werden soll) weiterhin im Task-Computersystem vorliegt und aufgerufen werden kann. Ein weiterer Vorteil liegt darin, dass auf Initiative des Produktions-Computersystems zum Übertragen der Task-Beschreibungsdatei auf ein vordefiniertes Austausch-Verzeichnis zugegriffen wird, ohne die Task-Beschreibungsdatei im Task-Computersystem beispielsweise suchen zu müssen. Somit fungiert das Austausch-Verzeichnis als Pull-Verzeichnis, aus dem das Produktions-Computersystem die Task-Beschreibungsdatei zum Übertragen abholen kann. Dies erleichtert einen Übertragungsprozess, z.B. via SCP.

Vorteilhaft wird vor dem Übertragen der Task-Beschreibungsdatei vom Task-Computersystem an das Produktions-Computersystem die Dateigröße der Task-Beschreibungsdatei durch das Produktions-Computersystem abgefragt, wobei die Task-Beschreibungsdatei nur auf das Produktions-Computersystem übertragen wird, wenn die Dateigröße einen vorbestimmten Grenzwert nicht überschreitet. Andernfalls kann beispielsweise eine Fehlermeldung an einem Benutzer der ersten Benutzergruppe über das Task-Computersystem ausgegeben werden und/oder das Verfahren abgebrochen werden. Dieses Vorgehen hat den Vorteil, dass eine Störung im Produktionsablauf des Produktions-Computersystems durch gigantische manipulierte Task-Beschreibungsdateien verhindert wird.

Vorteilhaft umfasst das Erstellen der Task-Beschreibungsdatei ein Verschlüsseln und/oder Signieren der Inhalte der Task-Beschreibungsdatei anhand eines Schlüssels eines Benutzers der zweiten Benutzergruppe. Alternativ hierzu kann auch ein Schlüssel des Key-Computersystems eingesetzt werden. Während des Überprüfens der Zugehörigkeit der erstellten Task-Beschreibungsdatei zu wenigstens einem auf dem Produktions-Computersystem hinterlegten Task durch das Produktions-Computersystem im Rahmen des automatisierten Durchführungsprozesses des Tasks im Produktions-Computersystem wird vorteilhaft auch die Authentizität eines Benutzers der zweiten Benutzergruppe (und gegebenenfalls auch die Authentizität eines Benutzers der ersten Benutzergruppe) überprüft. Dies kann beispielsweise anhand eines verwendeten Schlüssels oder einer Signatur des Benutzers der ersten und/oder zweiten Benutzergruppe oder des Key-Computersystems durchgeführt werden. Auf diese Weise kann überprüft werden, ob eine entsprechende Task-Beschreibungsdatei gültig ist und/oder durch eine hierfür autorisierte Person erstellt worden ist. Somit kann auch auf diese Weise einer unerwünschten Manipulation von Task-Beschreibungsdateien entgegengewirkt werden.

Vorteilhaft wird vor dem Ausführen eines zur erstellten Task-Beschreibungsdatei zugehörigen Tasks im Produktions-Computersystem anhand der erstellten Task-Beschreibungsdatei die Gültigkeit der konfigurierten Durchführungsparameter überprüft und der zugehörige Task nur ausgeführt, wenn die konfigurierten Durchführungsparameter gültig sind. Beispielsweise kann überprüft werden, ob der von einem Benutzer der ersten Benutzergruppe angewiesene Zeitpunkt für die Ausführung eines Tasks innerhalb des durch einen Benutzer der zweiten Benutzergruppe vorgegebenen Zeitrahmens liegt, welcher in er erstellten Task-Beschreibungsdatei vorgegeben ist. Weist ein Administrator beispielsweise über das Task-Computersystem das Produktions-Computersystem an, um 9:00 Uhr vormittags einen zugehörigen Task durchzuführen und ist durch einen Benutzer der zweiten Benutzergruppe in der Task-Beschreibungsdatei nur ein Zeitrahmen zwischen 10:00 Uhr und 10:15 Uhr vormittags konfiguriert, so liegt der angewiesene Zeitpunkt außerhalb des eingestellten Zeitrahmens. In diesem Fall kann entschieden werden, den Task erst zum eingestellten Termin durchzuführen oder eine Fehlermeldung auszugeben oder das Verfahren abzubrechen.

Zur weiteren Erhöhung des Datenschutzes ist bei dem hier erläuterten Verfahren vorteilhaft vorgesehen, dass ein Zugriff eines Benutzers der zweiten Benutzergruppe auf das Produktions-Computersystem und/oder auf das Task-Computersystem verhindert wird. Auf diese Weise kann ein Benutzer der zweiten Benutzergruppe nur auf das Key-Computersystem zugreifen. Ein Benutzer der ersten Benutzergruppe kann nur auf das Task-Computersystem zugreifen kann. Kein Benutzer, weder der ersten Benutzergruppe noch der zweiten Benutzergruppe, kann jedoch auf das Produktions-Computersystem zugreifen. Dieses ist eingekapselt und geschützt vor jeglichem Zugriff.

Vorteilhaft wird in einem zweiten Aspekt die oben genannte Aufgabe ebenfalls gelöst durch ein Datenverarbeitungssystem nach dem nebengeordneten Anspruch 10. Das Datenverarbeitungssystem umfasst wenigstens ein Key-Computersystem, ein Task-Computersystem und ein Produktions-Computersystem, wobei das Task-Computersystem eine oder mehrere vorbestimmte Tasks-Beschreibungsdateien enthält, welche jeweils eine Beschreibung eines Tasks auf dem Produktions-Computersystem enthalten. Das Produktions-Computersystem ist vorteilhaft eingerichtet, vorbestimmte Aktionen durchzuführen, und enthält hierfür einen oder mehrere zu den Task-Beschreibungsdateien zugehörige Tasks. Ein Task auf dem Produktions-Computersystem ist anhand einer Übertragung einer Task-Beschreibungsdatei vom Task-Computersystem an das Produktions-Computersystem gesteuert ausführbar. Vorteilhaft weisen sowohl das Produktions-Computersystem als auch das Task-Computersystem eine erste und eine zweite Zugriffssteuereinheit auf, die eingerichtet sind, einen Zugriff eines Benutzers einer ersten Benutzergruppe auf das Task-Computersystem zu erlauben, jedoch zumindest in einem vorbestimmten Betriebszustand des Produktions-Computersystems einen Zugriff eines Benutzers der ersten Benutzergruppe auf das Produktions-Computersystem zu verhindern, in der Weise, dass das Task-Computersystem offene Ports aufweist und das Produktions-Computersystem sämtliche für das Verfahren maßgeblichen Ports dauerhaft derart geschlossen hält, dass an diesen Ports keine Programme zum Zweck der Ansprechbarkeit von außen laufen. Jedoch kann ein Prozess zum Übertragen der Task-Beschreibungsdatei vom Task-Computersystem an das Produktions-Computersystem auf Anweisung des Produktions-Computersystems gestartet werden, wobei das Übertragen der Task-Beschreibungsdatei durch das Produktions-Computersystem veranlasst werden kann, und wobei das Produktions-Computersystem den Austausch-Prozess steuert.

Zudem ist das Key-Computersystem (Key-Server) eingerichtet, vorbestimmte Zugriffsrechte und/oder Schlüssel von Benutzern einer zweiten Benutzergruppe (Key authority) zu verwalten und eine Konfigurationsmöglichkeit zum Konfigurieren vorgegebener Durchführungsparameter für einen Task des Produktions-Computersystems (Produktions-Server) bereitzustellen, wobei das Key-Computersystem (Key-Server) eine dritte Zugriffssteuereinheit aufweist, die eingerichtet ist, einen Zugriff eines Benutzers der zweiten Benutzergruppe (Key authority) auf das Key-Computersystem (Key-Server) zu erlauben, jedoch zumindest in einem vorbestimmten Betriebszustand des Key-Computersystems (Key-Server) einen Zugriff eines Benutzers der ersten Benutzergruppe (Administrator) auf das Key-Computersystem (Key-Server) zu verhindern.

Auch durch ein derartiges Datenverarbeitungssystem ist vorteilhaft das Ansprechen von Tasks auf einem Produktions-Computersystem eventgesteuert durchführbar, was interaktive Abläufe zufriedenstellend ermöglicht. Dennoch ist das Produktions-Computersystem vor einem Datenmissbrauch sicher geschützt, weil ein Zugriff eines Benutzers der ersten Benutzergruppe auf das Produktions-Computersystem verhindert ist, wobei ein Benutzer der ersten Benutzergruppe lediglich die Ausführung eines Tasks vermittels einer Task-Beschreibungsdatei anweisen kann. Weitere Vorteile des Datenverarbeitungssystems ergeben sich analog zu den im Rahmen des hier vorgestellten Verfahrens erläuterten Aspekten.

Eine Anwendung des genannten Datenverarbeitungssystems ist beispielsweise die Verwendung von entsprechenden Servern innerhalb einer abgesicherten Computernetz-Infrastruktur, in der insbesondere ein Produktions-Server abgekapselt und vor jeglichem Zugriff geschützt neben einem Task-Server und/oder einem Key-Server physisch/logisch dezentral eingerichtet ist.

Insbesondere in einer derartigen Computernetz-Infrastruktur kann die Sicherheit durch entsprechende Hardware-Abschottung und physische Zugriffsbeschränkungen für ein Personal des Datenverarbeitungssystems (zum Beispiel Administratoren, Operator, Security-Manager, etc.) zusätzlich erhöht werden. Weiterhin ist denkbar, Vier-Augen-Prinzipien auf Seiten der Benutzer der ersten und/oder zweiten Benutzergruppe umzusetzen.

Weitere vorteilhafte Ausgestaltungen sowohl des Verfahrens als auch des Datenverarbeitungssystems der erläuterten Art sind in den Unteransprüchen sowie in der nachfolgenden Figurenbeschreibung offenbart.

Die Erfindung wird anhand mehrerer Zeichnungen näher erläutert. Insbesondere zeigen:
- Figur 1: eine schematisierte Ablaufstruktur zur Konfiguration und Durchführung eines Tasks,
- Figur 2: eine schematisierte Ablaufstruktur zur Durchführung eines Backup-Prozesses beziehungsweise eines Wiederherstellungs-Prozesses und
- Figur 3: eine schematisierte Ablaufstruktur zum Umbenennen von Dateien.

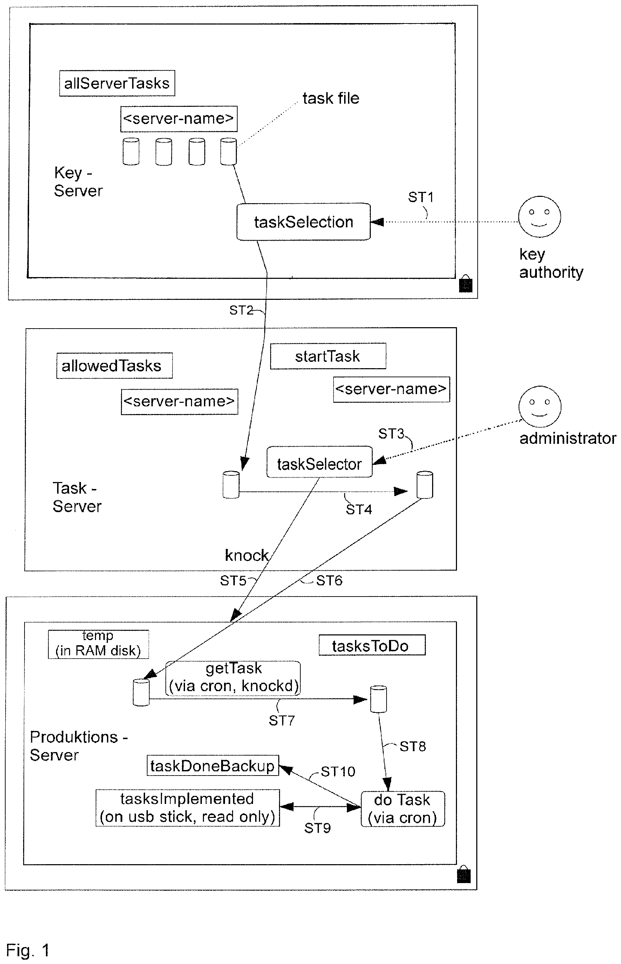

Figur 1 zeigt eine Ablaufstruktur zum automatisierten Ausführen von Tasks in einem Produktions-Server. Figur 1 zeigt ein Datenverarbeitungssystem umfassend einen Key-Server, einen Task-Server sowie einen Produktions-Server. Der Key-Server und der Produktions-Server sind mit einem speziellen Zugriffsschutz (siehe Schlosssymbol) versehen, wobei entweder nur ein Zugriff durch bestimmte Personen einer ausgewählten Benutzergruppe erlaubt ist oder keinerlei Zugriff von außen während des Betriebs ermöglicht ist. Beispielsweise ist im Falle des Produktions-Servers keinerlei Zugriff durch jegliche Benutzer von außen möglich. Key-Server und Produktions-Server können beispielsweise Teil einer eingekapselten Computernetz-Infrastruktur sein.

Zunächst wird die Funktionsweise des Key-Servers beschrieben. Im ersten Verfahrensschritt ST1 wird, ausgelöst durch einen Befehl eines Benutzers einer vorbestimmten Benutzergruppe ("key authority"), das Programm "taskSelection" aufgerufen. Dies kann beispielsweise über eine grafische Benutzeroberfläche, zum Beispiel einem Webbrowser, erfolgen. Das Programm "taskSelection" kann beispielsweise Zugriffsrechte für einzelne Benutzer einer Benutzergruppe verwalten, welche als so genannte Non-Root-User eingeschränkten Zugriff auf den Key-Server haben. Über das Programm "taskSelection" kann beispielsweise ein Verzeichnis "allServerTasks" aufgerufen werden, in welchem sich Unterverzeichnisse mit auszuwählenden Servernamen ("<server-name>") mit allen verfügbaren Tasks (repräsentiert durch Task-Beschreibungsdateien, "task file") für entsprechende Server befinden.

Über eine spezielle Funktion innerhalb des Programms "taskSelection" kann ein Task über die grafische Benutzeroberfläche ausgewählt oder konfiguriert werden. Hierzu wird in der grafischen Benutzeroberfläche ein bestimmter Server "<server-name>" aus der hinterlegten Liste von Servern im Verzeichnis "allServerTasks" abgefragt. Anschließend wird ein bestimmter Task aus einer Liste von Tasks für den entsprechenden Server (definiert durch "<server-name>") abgefragt, der aus dem Verzeichnis "allServerTasks" ausgewählt wurde.

Ferner können vorbestimmte Durchführungsparameter festgelegt werden. Beispielsweise kann festgelegt werden, ob es sich um einen nicht-datenschutzrelevanten Task oder einen datenschutzrelevanten Task handelt. Nichtdatenschutzrelevante Tasks können beispielsweise zu jeder Zeit auf dem Produktions-Server ausgeführt werden, wobei datenschutzrelevante Tasks nur zu vorbestimmten Zeitpunkten und innerhalb vordefinierter Zeiträume durchgeführt werden können. Weitere vorteilhafte Durchführungsparameter können beispielsweise von einem Benutzer der zweiten Benutzergruppe ("key authority") über die grafische Benutzerschnittstelle eingestellt werden. Es kann beispielsweise ein bestimmter Zeitraum und eine bestimmte erlaubte Durchführungsdauer für den ausgewählten Task vorgegeben werden.

Anschließend wird anhand der eingestellten Durchführungsparameter eine temporäre Task-Beschreibungsdatei erstellt, welche beispielsweise über einen privaten Schlüssel des Key-Servers oder des Benutzers der zweiten Benutzergruppe signiert wird. Danach wird die temporäre Task-Beschreibungsdatei mit einem öffentlichen Schlüssel des Produktions-Servers verschlüsselt.

Hierbei ist anzumerken, dass ein Benutzer der zweiten Benutzergruppe ("key authority") generell nicht ermächtigt ist, neue Aktionstypen für den Produktions-Server festzulegen oder bestehende Aktionstypen zu manipulieren. Ein entsprechender Aktionstyp verknüpft mit einem vordefinierten Task muss eingerichtet werden, wenn der Produktions-Server aufgesetzt wird. Über den Key-Server können nur bestehende Tasks konfiguriert und in ihrer Durchführungsart festgelegt werden.

In einem zweiten Verfahrensschritt ST2 wird ein Prozess gestartet, welcher die temporäre Task-Beschreibungsdatei schließlich vom Key-Server auf den Task-Server überträgt und insbesondere in einem Verzeichnis "allowedTasks" mit einem entsprechenden Unterverzeichnis "<server-name>" ablegt. Insbesondere enthält das Verzeichnis "allowedTasks" im Task-Server eine Task-Beschreibungsdatei für jeden erlaubten Task des Produktions-Servers. Die im Verzeichnis "allowedTasks" abgelegten Task-Beschreibungsdateien können beispielsweise mit einem nicht zugänglichen Schlüssel des Key-Servers verschlüsselt sein. Insbesondere sind die Task-Beschreibungsdateien signiert beziehungsweise verschlüsselt mit einem privaten Schlüssel des Key-Servers und/oder einem öffentlichen Schlüssel des Produktions-Servers vermittels des Programms "taskSelection" im Key-Server.

Zum automatisierten Ausführen eines Tasks im Produktions-Server kann ein Benutzer einer weiteren Benutzergruppe ("administrator") über einen weiteren Verfahrensschritt ST3 auf den Task-Server zugreifen und insbesondere das Programm "taskSelector" beispielsweise über eine grafische Benutzeroberfläche aufrufen. Hier sei angemerkt, dass ein derartiger Administrator ausschließlich Zugriff auf den Task-Server, jedoch keinen Zugriff auf den Key-Server beziehungsweise auf den Produktions-Server besitzt. Auf diese Weise ist diese Benutzergruppe ("administrator") in ihren Zugriffsrechten getrennt von der oben erläuterten Benutzergruppe ("key authority"). Die "key authority" kann beispielsweise in ihrem Zugriff lediglich auf den Key-Server beschränkt sein, sodass diese keinen Zugriff auf den Task-Server und/oder den Produktions-Server besitzt.

Zum Aufrufen eines Tasks im Produktions-Server wählt der Administrator im Task-Server zunächst einen entsprechenden Server aus einer Liste "<server-name>" von Produktions-Servern (im Verzeichnis "allowedTasks") aus. Anschließend kann beispielsweise ein vorbestimmter Task aus einer Liste von Tasks, welche für den entsprechenden Server erlaubt sind, ausgewählt werden. Dieser Task (in Form einer Task-Beschreibungsdatei) kann zum Beispiel vom Administrator mit einem vorbestimmten Durchführungszeitpunkt versehen werden, wobei automatisiert ein Zeitstempel zur Task-Beschreibungsdatei hinzugefügt wird. Auf diese Weise kann der Administrator anweisen, dass ein bestimmter Task im Produktions-Server zu einem vordefinierten Zeitpunkt durchgeführt werden soll.

Anschließend kann ein vordefinierter Prozess durch den Administrator ausgelöst werden, welcher automatisiert die ausgewählte und mit einem Zeitstempel versehene Task-Beschreibungsdatei aufruft und in einem Verfahrensschritt ST4 in ein lokales Austausch-Verzeichnis "startTask" mit Unterverzeichnis "<server-name>" kopiert. Die ausgewählte Task-Beschreibungsdatei ist somit bereit zum Transfer auf den Produktions-Server.

In einem weiteren Verfahrensschritt ST5 wird über einen Port-Knocking-Prozess und eine Sequenz vorbestimmter Paket-Daten an vorbestimmten Ports des Produktions-Servers angeklopft ("knock") und der Produktions-Server auf diese Weise darüber informiert, dass eine neue Task-Beschreibungsdatei bereit zum Austausch auf den Produktions-Server im Task-Server vorliegt. Wenn die übertragene Paket-Datensequenz mit einer vordefinierten Sequenz im Produktions-Server übereinstimmt (beispielsweise überprüft durch einen Knock-Daemon) wird automatisiert das Programm "getTask" im Produktions-Server aufgerufen.

Das Programm "getTask", beispielsweise gesteuert durch einen sogenannten "Cron-Daemon" oder den Knock-Daemon, kopiert anschließend im Verfahrensschritt ST6 alle Task-Beschreibungsdateien, welche im Austausch-Verzeichnis "startTask" mit Unterverzeichnis "<server-name>" im Task-Server abgelegt sind in ein lokales temporäres RAM-Verzeichnis "temp" auf dem Produktions-Server. Wenn dies erfolgreich durchgeführt wurde, werden im Schritt ST7 die Task-Beschreibungsdateien von diesem temporären Verzeichnis "temp" in ein lokales Verzeichnis "tasksToDo" im Produktions-Server abgelegt.

In einem weiteren Verfahrensschritt ST8 wird ein Skript "do Task" z.B. über den Cron-Daemon aufgerufen, welches das Verzeichnis "tasksToDo" nach neuen Task-Beschreibungsdateien durchsucht und, z.B. in Abhängigkeit der hinterlegten Zeitstempel, hierarchisch die einzelnen Task-Beschreibungsdateien aufruft und abarbeitet. In einem Schritt ST9 vergleicht das Skript "do Task" den Inhalt der aufgerufenen Task-Beschreibungsdateien aus dem Verzeichnis "tasksToDo" mit einem im Produktions-Server hinterlegten Datenbestand, abgelegt im Verzeichnis "tasksImplemented", das beispielsweise auf einem USB-Stick gemounted ist und nur Leserechte aufweist. Auf diese Weise wird überprüft, ob zu einer entsprechenden Task-Beschreibungsdatei überhaupt ein entsprechend auszuführender Task im Produktions-Server existiert. Wenn dies erfolgreich verifiziert werden kann, so kann der entsprechende Task zum Zeitpunkt des in der Task-Beschreibungsdatei definierten Zeitstempels entsprechend gestartet werden. Ausgeführte und abgeschlossene Tasks werden in einem Verfahrensschritt ST10 vom Verzeichnis "tasksToDo" in ein Verzeichnis "taskDoneBackup" verschoben. Wenn alle Tasks entsprechend den abgelegten Task-Beschreibungsdateien abgearbeitet sind, wird das Verfahren beendet.

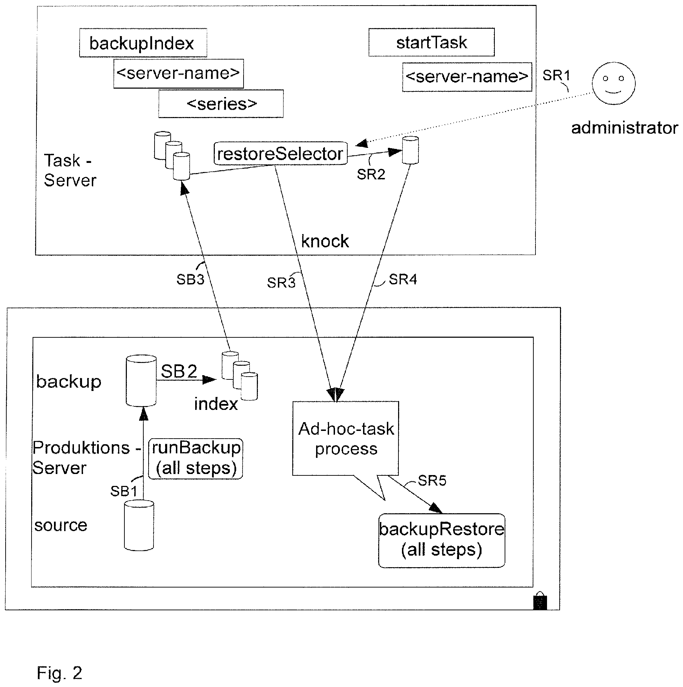

Figur 2 zeigt eine schematisierte Ablaufübersicht zum automatisierten Durchführen eines Backup-Prozesses beziehungsweise eines Wiederherstellungsprozesses über eine automatisierte Durchführung von Tasks auf dem Produktions-Server.

Zunächst soll ein Backup-Prozess dargestellt werden. Dazu wird zunächst ein Backup-Tool "runBackup" in einem ersten Schritt SB1 innerhalb des Produktions-Servers aufgerufen. Das Programm "runBackup" führt daraufhin ein Backup aus einem Quell-Verzeichnis ("source") in ein Backup-Verzeichnis beziehungsweise einen Backup-Speicher ("backup") durch. Der Backup-Speicher kann dabei entweder im Produktions-Server selbst eingerichtet sein oder in einem anderen Server eingerichtet sein. Es ist auch denkbar, ein Backup innerhalb des Produktions-Servers auf einen örtlich anderen Server zu replizieren.

Nachdem ein Backup erfolgreich fertig gestellt worden ist, wird ein Index von entsprechend gesicherten Dateien in Form von Index-Dateien ("index") in einem Schritt SB2 erzeugt. Die Index-Dateien werden in einem weiteren Schritt SB3 schließlich vom Produktions-Server automatisiert auf den Task-Server repliziert, sodass im Ergebnis eine aktualisierte Liste von Index-Dateien für jeden Backup-Prozess im Produktions-Server auf dem Task-Server zur Verfügung steht.

Zum automatisierten Ausführen eines Wiederherstellungsprozesses ruft ein Administrator über einen ersten Schritt SR1 eine grafische Benutzeroberfläche "restoreSelector" im Task-Server auf und wählt den entsprechenden Produktions-Server, die entsprechende Backup-Serie und schließlich die entsprechenden wiederherzustellenden Daten über die Verzeichnisse "backupIndex", "<server-name>" und "<series>".

Anschließend erstellt das Programm "restoreSelector" in einem zweiten Schritt SR2 eine Task-Beschreibungsdatei zum Wiederherstellen der ausgewählten Entitäten und legt diese Task-Beschreibungsdatei im Verzeichnis "startTask" mit Unterverzeichnis "<server-name>" ab.

In einem weiteren Schritt SR3 veranlasst das Programm "restoreSelector" einen entsprechend den obigen Erläuterungen durchzuführenden Port-Knocking-Prozess ("knock") und klopft an entsprechenden Ports des Produktions-Servers an. Bei erfolgreichem Öffnen des Produktions-Servers wird schließlich im Schritt SR4 der Ausführprozess gestartet und die Task-Beschreibungsdatei für den Wiederherstellungsprozess vom Task-Server auf den Produktions-Server kopiert. Anschließend wird der Produktions-Server durch Schließen aller Ports erneut abgekapselt vom Task-Server.

Schließlich wird im Schritt SR5 das Skript "backupRestore" durch Vergleich der Task-Beschreibungsdatei mit vorliegenden Wiederherstellungstasks im Produktions-Server als Ad-hoc-Task aufgerufen. Das Skript "backupRestore" veranlasst schließlich einen Wiederherstellungsprozess innerhalb des Produktions-Servers zum Wiederherstellen aller Daten aus dem Speicher "backup" in das ursprüngliche Quell-Verzeichnis "source".

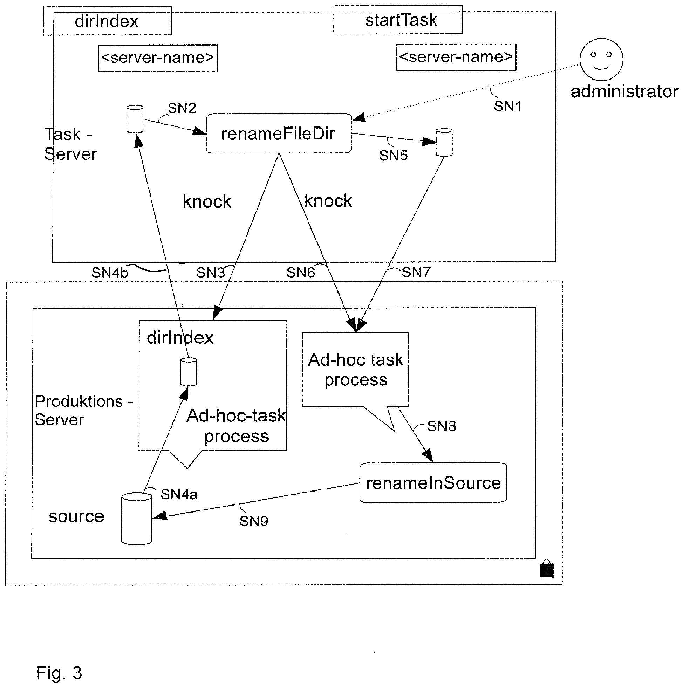

Figur 3 zeigt schließlich eine schematisierte Ablaufübersicht zum Umbenennen von Dateien in einem Quell-Verzeichnis des Produktions-Servers. Hierzu ruft ein Administrator durch Zugriff auf den Task-Server ein Programm "renameFileDir" in einem ersten Verfahrensschritt SN1 auf. Das Programm "renameFileDir" ruft seinerseits eine Index-Datei aus dem Verzeichnis "dirIndex" mit Unterverzeichnis "<server-name>" auf, welche einen Index aller Dateinamen im Produktions-Server enthält.

Gegebenenfalls (z.B. auf Veranlassung des Administrators oder durch eine Routine im Task-Server) startet das Programm "renameFileDir" einen Port-Knocking-Prozess im Verfahrensschritt SN3 und klopft ("knock") am Produktions-Server an, um bei erfolgreicher Authentifizierung am Produktions-Server einen entsprechenden Ad-hoc-Task auszulösen, welcher in einem Schritt SN4a aus einem Quell-Verzeichnis "source" eine aktualisierte Index-Datei erzeugt und im Verzeichnis "dirIndex" innerhalb des Produktions-Servers ablegt. Sobald dies durchgeführt ist, kopiert der Produktions-Server die Index-Datei aus dem lokalen Verzeichnis "dirIndex" auf den Task-Server in das dortige Verzeichnis "dirIndex" mit Unterverzeichnis "<server-name>".

Anschließend erzeugt das Programm "renameFileDir" im Schritt SN5 eine Task-Beschreibungsdatei zum automatisierten Umbenennen von Dateien und/oder Verzeichnissen im Produktions-Server ausgehend von Anweisungen des Administrators, die in der Task-Beschreibungsdatei hinterlegt sind (zum Beispiel Ersetzungen "alter Name" zu "neuer Name"). Die entsprechende Task-Beschreibungsdatei wird im Verzeichnis "startTask" mit Unterverzeichnis "<server-name>" im Task-Server abgelegt. Ausgelöst durch einen erneuten Port-Knocking-Prozess des Programms "renameFileDir" in Schritt SN6 ("knock") wird die Task-Beschreibungsdatei in einem Schritt SN7 auf dem Produktions-Server übertragen, wo der zugehörige Task "renameInSource" im Verfahrensschritt SN8 aufgerufen wird. Der Task "renameInSource" führt dann in einem weiteren letzten Schritt SN9 eine Umbenennung von Quelldateien im Quell-Verzeichnis "source" durch. Anschließend wird das Verfahren beendet.

Im weiteren nicht dargestellten Verfahren kann beispielsweise auch ein Boot-Prozess ausgelöst werden zum automatisierten Aufsetzen und Hochfahren eines Produktions-Servers durch Austausch von entsprechenden Task-Beschreibungsdateien zwischen dem Produktions-Server und dem Key-Server. Auf diese Weise können bestimmte Boot-Dateien zwischen dem Key-Server und dem Produktions-Server ausgetauscht werden, welche beispielsweise Zuordnungstabellen zum geordneten Hochfahren des Produktions-Servers enthalten. Auf diese Weise kann der Produktions-Server geordnet hochfahren, wobei nach dem Hochfahren jegliche Datenverbindung des Produktions-Servers zur Außenwelt (z.B. per SSH) abgetrennt wird und der Boot-Vorgang komplettiert wird. Ein auf diese Weise hochgefahrener Produktions-Server kann dann jedoch entsprechend den obigen Erläuterungen durch vordefinierte Task-Beschreibungsdateien und Port-Knocking-Prozesse angesprochen werden, sodass wie erläutert entsprechende Tasks auf dem Produktions-Server durchgeführt werden können.

Sämtliche dargestellten Ablaufstrukturen sowie Strukturen und Benennungen der dargestellten Verzeichnisse, Daten und Topologien sind lediglich beispielhaft gewählt.

### Bezugszeichenliste

- Administrator: Benutzer einer ersten Benutzergruppe
- Key authority: Benutzer einer zweiten Benutzergruppe
- ST1 bis ST10: Verfahrensschritte zum Ausführen eines Tasks
- SB1 bis SB3: Verfahrensschritte zum Ausführen eines Backupprozesses
- SR1 bis SR5: Verfahrensschritte zum Ausführen eines Wiederherstellungsprozesses
- SN1 bis SN9: Verfahrensschritte zum Umbenennen von Dateien

## Patentansprüche

1. Verfahren zum Ausführen von Tasks auf einem Produktions-Computersystem, umfassend die Schritte:
- Bereitstellen einer Konfigurationsmöglichkeit zum Konfigurieren vorgegebener Durchführungsparameter für einen Task eines Produktions-Computersystems durch ein Key-Computersystem,
- Erstellen wenigstens einer Task-Beschreibungsdatei im Key-Computersystem anhand konfigurierter Durchführungsparameter, wobei die Task-Beschreibungsdatei eine Beschreibung eines Tasks auf dem Produktions-Computersystem enthält,
- automatisiertes Übertragen der Task-Beschreibungsdatei vom Key-Computersystem auf ein Task-Computersystem und Hinterlegen der Task-Beschreibungsdatei im Task-Computersystem,
- Aufrufen der hinterlegten Task-Beschreibungsdatei im Task-Computersystem,
- automatisiertes Übertragen der Task-Beschreibungsdatei vom Task-Computersystem auf das Produktions-Computersystem,
- Überprüfen der Zugehörigkeit der Task-Beschreibungsdatei zu wenigstens einem auf dem Produktions-Computersystem hinterlegten Task durch das Produktions-Computersystem,
- Ausführen des zur Task-Beschreibungsdatei zugehörigen Tasks im Produktions-Computersystem anhand der Task-Beschreibungsdatei, falls das Überprüfen der Zugehörigkeit erfolgreich war,
wobei das Task-Computersystem offene Ports aufweist, sodass ein Zugriff eines Benutzers einer ersten Benutzergruppe auf das Task-Computersystem eingerichtet ist, und wobei das Produktions-Computersystem sämtliche für das Verfahren maßgeblichen Ports dauerhaft derart geschlossen hält, dass an diesen Ports keine Programme zum Zweck der Ansprechbarkeit von außen laufen und dadurch während der Durchführung der obigen Schritte in einem vorbestimmten Betriebszustand des Produktions-Computersystems ein Zugriff eines Benutzers der ersten Benutzergruppe auf das Produktions-Computersystem verhindert wird,
wobei jedoch ein Prozess zum Übertragen der Task-Beschreibungsdatei vom Task-Computersystem an das Produktions-Computersystem auf Anweisung des Produktions-Computersystems gestartet wird und das Übertragen der Task-Beschreibungsdatei durch das Produktions-Computersystem veranlasst wird, wobei das Produktions-Computersystem den Austausch-Prozess steuert, und
wobei das Key-Computersystem vorbestimmte Zugriffsrechte und/oder Schlüssel von Benutzern einer zweiten Benutzergruppe verwaltet und ein Zugriff eines Benutzers der zweiten Benutzergruppe auf das Key-Computersystem eingerichtet ist, jedoch zumindest in einem vorbestimmten Betriebszustand des Key-Computersystems ein Zugriff eines Benutzers der ersten Benutzergruppe auf das Key-Computersystem verhindert wird.

2. Verfahren nach Anspruch 1, wobei das automatisierte Übertragen der Task-Beschreibungsdatei vom Task-Computersystem auf das Produktions-Computersystem die folgenden Schritte umfasst:
- Senden einer vorbestimmten Sequenz an Paket-Daten vom Task-Computersystem an das Produktions-Computersystem, wobei vorbestimmte Ports des Produktions-Computersystems geschlossen sind und wobei die Sequenz in einer vorbestimmten Reihenfolge einen oder mehrere vorbestimmte Ports des Produktions-Computersystems anspricht,
- Überprüfen der gesendeten Sequenz auf Übereinstimmung mit einer vordefinierten Sequenz im Produktions-Computersystem, sowie
- Starten des Prozesses zum Übertragen der Task-Beschreibungsdatei vom Task-Computersystem an das Produktions-Computersystem auf Anweisung des Produktions-Computersystems.

3. Verfahren nach Anspruch 1 oder 2, wobei die Task-Beschreibungsdatei vor dem Übertragen an das Produktions-Computersystem in ein vordefiniertes Austausch-Verzeichnis innerhalb der Verzeichnisstruktur des Task-Computersystems abgelegt wird.

4. Verfahren nach einem der Ansprüche 1 bis 3, wobei vor dem Übertragen der Task-Beschreibungsdatei vom Task-Computersystem auf das Produktions-Computersystem die Dateigröße der Task-Beschreibungsdatei durch das Produktions-Computersystem abgefragt wird, wobei die Task-Beschreibungsdatei nur auf das Produktions-Computersystem übertragen wird, wenn die Dateigröße einen vorbestimmten Grenzwert nicht überschreitet.

5. Verfahren nach einem der Ansprüche 1 bis 4, wobei das Erstellen der Task-Beschreibungsdatei ein Verschlüsseln und/oder Signieren der Inhalte der Task-Beschreibungsdatei anhand eines Schlüssels eines Benutzers der zweiten Benutzergruppe umfasst.

6. Verfahren nach Anspruch 5, wobei während des Überprüfens der Zugehörigkeit der erstellten Task-Beschreibungsdatei zu wenigstens einem auf dem Produktions-Computersystem hinterlegten Task durch das Produktions-Computersystem die Authentizität eines Benutzers der zweiten Benutzergruppe überprüft wird.

7. Verfahren nach einem der Ansprüche 1 bis 6, wobei vor dem Ausführen eines zur erstellten Task-Beschreibungsdatei zugehörigen Tasks im Produktions-Computersystem anhand der erstellten Task-Beschreibungsdatei die Gültigkeit der konfigurierten Durchführungsparameter überprüft wird und der zugehörige Task nur ausgeführt wird, wenn die konfigurierten Durchführungsparameter gültig sind.

8. Verfahren nach einem der Ansprüche 1 bis 7, wobei zumindest in einem vorbestimmten Betriebszustand des Produktions-Computersystems ein Zugriff eines Benutzers der zweiten Benutzergruppe auf das Produktions-Computersystem verhindert wird.

9. Verfahren nach einem der Ansprüche 1 bis 8, wobei zumindest in einem vorbestimmten Betriebszustand des Task-Computersystems ein Zugriff eines Benutzers der zweiten Benutzergruppe auf das Task-Computersystem verhindert wird.

10. Datenverarbeitungssystem zumindest umfassend:
- ein Key-Computersystem,
- ein Task-Computersystem und
- ein Produktions-Computersystem,
wobei das Task-Computersystem eine oder mehrere vorbestimmte Task-Beschreibungsdateien enthält, welche jeweils eine Beschreibung eines oder mehrerer Tasks auf dem Produktions-Computersystem enthalten, und
wobei das Produktions-Computersystem eingerichtet ist, vorbestimmte Aktionen durchzuführen, und einen oder mehrere zu den Task-Beschreibungsdateien zugehörige Tasks enthält, und wobei ein vordefinierter Task auf dem Produktions-Computersystem anhand einer Übertragung einer Task-Beschreibungsdatei vom Task-Computersystem an das Produktions-Computersystem gesteuert ausführbar ist, und
wobei das Produktions-Computersystem eine erste Zugriffssteuereinheit und das Task-Computersystem eine zweite Zugriffssteuereinheit aufweisen, die eingerichtet sind, einen Zugriff eines Benutzers einer ersten Benutzergruppe auf das Task-Computersystem zu erlauben, jedoch zumindest in einem vorbestimmten Betriebszustand des Produktions-Computersystems einen Zugriff eines Benutzers der ersten Benutzergruppe auf das Produktions-Computersystem zu verhindern, in der Weise, dass das Task-Computersystem offene Ports aufweist und das Produktions-Computersystem sämtliche für das Verfahren maßgeblichen Ports dauerhaft derart geschlossen hält, dass an diesen Ports keine Programme zum Zweck der Ansprechbarkeit von außen laufen,
wobei jedoch ein Prozess zum Übertragen der Task-Beschreibungsdatei vom Task-Computersystem an das Produktions-Computersystem auf Anweisung des Produktions-Computersystems gestartet werden kann und das Übertragen der Task-Beschreibungsdatei durch das Produktions-Computersystem veranlasst werden kann, wobei das Produktions-Computersystem den Austausch-Prozess steuert, und
wobei das Key-Computersystem eingerichtet ist, vorbestimmte Zugriffsrechte und/oder Schlüssel von Benutzern einer zweiten Benutzergruppe zu verwalten und eine Konfigurationsmöglichkeit zum Konfigurieren vorgegebener Durchführungsparameter für einen Task des Produktions-Computersystems bereitzustellen, und
wobei das Key-Computersystem eine dritte Zugriffssteuereinheit aufweist, die eingerichtet ist, einen Zugriff eines Benutzers der zweiten Benutzergruppe auf das Key-Computersystem zu erlauben, jedoch zumindest in einem vorbestimmten Betriebszustand des Key-Computersystems einen Zugriff eines Benutzers der ersten Benutzergruppe auf das Key-Computersystem zu verhindern.

11. Datenverarbeitungssystem nach Anspruch 10, wobei die erste und zweite Zugriffssteuereinheit eingerichtet sind, zumindest in einem vorbestimmten Betriebszustand des Produktions-Computersystems und/oder des Task-Computersystems einen Zugriff eines Benutzers der zweiten Benutzergruppe auf das Produktions-Computersystem und/oder auf das Task-Computersystem zu verhindern.

12. Datenverarbeitungssystem nach Anspruch 10 oder 11, wobei die entsprechenden Computersysteme als Server eingerichtet sind.

13. Datenverarbeitungssystem nach einem der Ansprüche 10 bis 12, wobei zumindest das Produktions-Computersystem Teil einer abgesicherten Computernetz-Infrastruktur ist.

## Claims

1. Method for performing tasks on a production computer system, comprising the steps of:
- providing a configuration option for configuration of predetermined implementation parameters for a task of a production computer system by a key computer system,
- creating at least one task description file in the key computer system using configured implementation parameters, wherein the task description file contains a description of a task on the production computer system,
- automated transmission of the task description file from the key computer system to a task computer system and storing the task description file in the task computer system,
- requesting the stored task description file in the task computer system
- automated transmission of the task description file from the task computer system to the production computer system,
- verifying, by the production computer system, the allocation of the task description file to at least one task stored on the production computer system,
- executing, in the production computer system, the task allocated to the task description file using the task description file, if the verification of the allocation was successful,
wherein the task computer system comprises open ports such that access of a user of a first user group to the task computer system is configured and wherein the production computer system keeps all ports essential for the method permanently closed in such a way that no programs for external addressability are running on these ports and thus access of a user of the first user group to the production computer system is prevented during the performance of the above steps in a predetermined operating state of the production computer system,
wherein, however, upon instruction of the production computer system, a process for transmitting the task description file from the task computer system to the production computer system is started and transmitting of the task description file is initiated by the production computer system, wherein the production computer system controls the exchange process, and
wherein the key computer system manages predetermined access rights and/or keys of users of a second user group and access of a user of the second user group to the key computer system is configured, however access of a user of the first user group to the key computer system is prevented, at least in a predetermined operating state of the key computer system.

2. Method according to claim 1, wherein the automated transmission of the task description file from the task computer system to the production computer system comprises the following steps:
- sending a predetermined sequence of packet data from the task computer system to the production computer system, wherein predetermined ports of the production computer system are closed, and wherein the sequence addresses one or multiple predetermined ports of the production computer system in a predetermined order,
- verifying if the sent sequence matches a predetermined sequence in the production computer system, as well as
- starting the process for the transmission of the task description file from the task computer system to the production computer system upon instruction of the production computer system.

3. Method according to claim 1 or 2, wherein the task description file is stored in a predetermined exchange directory within the directory structure of the task computer system prior to transfer to the production computer system.

4. Method according to one of claims 1 to 3, wherein prior to transfer of the task description file from the task computer system to the production computer system, the production computer system requests the file size of the task description file, wherein the task description file is transmitted to the production computer system only if the file size does not exceed a predetermined threshold.

5. Method according to one of claims 1 to 4, wherein creating the task description file includes encrypting and/or signing the contents of the task description file using a key of a user of the second user group.

6. Method according to claim 5, wherein authenticity of a user of the second user group is verified while the production computer system verifies whether the created task description file is allocated to at least one task stored on the production computer system.

7. Method according to one of claims 1 to 6, wherein prior to execution of a task allocated to the created task description file in the production computer system using the created task description file, validity of the configured implementation parameters is verified and the allocated task is executed only if the configured implementation parameters are valid.

8. Method according to one of claims 1 to 7, wherein at least in a predetermined operating state of the production computer system access of a user of the second user group to the production computer system is prevented.

9. Method according to one of claims 1 to 8, wherein at least in a predetermined operating state of the task computer system access of a user of the second user group to the task computer system is prevented.

10. Data processing system, at least comprising:
- a key computer system,
- a task computer system and
- a production computer system,
wherein the task computer system contains one or multiple predetermined task description files which each contain a description of one or multiple tasks on the production computer system, and
wherein the production computer system is configured to perform predetermined actions and contains one or multiple tasks allocated to the task description files and wherein a predetermined task can be executed on the production computer system in a controlled manner by transferring a task description file from the task computer system to the production computer system, and wherein the production computer system comprises a first access control unit and the task computer system comprises a second access control unit, which are configured to allow access of a user of a first user group to the task computer system, however to prevent access of a user of the first user group to the production computer system at least in a predetermined operating state of the production computer system such that the task computer system comprises open ports and the production computer system keeps all ports essential for the method permanently closed in such a way that no programs are running on these ports for the purpose of external addressability,
wherein, however, a process for transmitting the task description file from the task computer system to the production computer system can be started upon instruction of the production computer system and transmitting the task description file can be initiated by the production computer system, wherein the production computer system controls the exchange process and
wherein the key computer system is configured to manage predetermined access rights and/or keys of users of a second user group and to provide a configuration option for configuration of predetermined implementation parameters for a task of the production computer system, and
wherein the key computer system comprises a third access control unit which is configured to allow access of a user of the second user group to the key computer system, however to prevent access of a user of the first user group to the key computer system at least in a predetermined operating state of the key computer system.

11. Data processing system according to claim 10, wherein the first and second access control units are configured to prevent access of a user of the second user group to the production computer system and/or to the task computer system at least in a predetermined operating state of the production computer system and/or the task computer system.

12. Data processing system according to Claim 10 or 11, wherein the respective computer systems are configured as servers.

13. Data processing system according to one of Claims 10 to 12, wherein at least the production computer system is part of a secured computer network infrastructure.

## Revendications

1. Procédé destiné à réaliser des tâches dans un système informatique de production, comprenant les étapes de:
- fournir une option de configuration en vue de configurer des paramètres de réalisation prédéterminés pour une tâche d'un système informatique de production par un système informatique clé,
- créer au moins un fichier de description des tâches dans le système informatique clé au moyen des paramètres de réalisation configurés, le fichier de description des tâches contenant une description d'une tâche dans le système informatique de production,
- transférer de manière automatique le fichier de description des tâches depuis le système informatique clé sur un système informatique tâche et stocker le fichier de description des tâches dans le système informatique tâche,
- appeler le fichier de description des tâches stocké dans le système informatique tâche,
- transférer de manière automatique le fichier de description des tâches depuis le système informatique tâche vers le système informatique de production,
- vérifier l'appartenance du fichier de description des tâches à au moins une tâche stockée sur le système informatique de production par le système informatique de production,
- exécuter la tâche appartenant au fichier de description des tâches dans le système informatique de production au moyen du fichier de description des tâches, si la vérification de l'appartenance était fait avec succès,
dans lequel le système informatique tâche présente des ports ouverts de sorte qu'un accès d'un utilisateur d'un premier groupe d'utilisateurs est configuré sur le système informatique tâche, et dans lequel le système informatique de production maintient en permanence tous les ports déterminants pour le procédé fermés de sorte qu'aucun programme ne fonctionne au niveau de ces ports aux fins d'adressabilité depuis l'extérieur et, par conséquent, durant la réalisation des étapes précédentes, il est impossible pour un utilisateur du premier groupe d'utilisateurs d'accéder au système informatique de production dans un état de fonctionnement prédéterminé du système informatique de production,
dans lequel un processus est cependant démarré pour transférer le fichier de description des tâches vers le système informatique de production depuis le système informatique tâche sur ordre du système informatique de production et le transfert du fichier de description des tâches est entraîné par le système informatique de production, le système informatique de production contrôlant le processus d'échange et
dans lequel le système informatique clé gère des droits d'accès prédéfinis et/ou des clés d'utilisateurs d'un deuxième groupe d'utilisateurs et un accès d'un utilisateur du deuxième groupe d'utilisateurs est configuré sur le système informatique clé, il est cependant impossible pour un utilisateur du premier groupe d'utilisateurs d'accéder, au moins dans un état de fonctionnement prédéfini du système informatique clé, au système informatique clé.

2. Procédé selon la revendication 1, dans lequel le transfert automatique du fichier de description des tâches depuis le système informatique tâche vers le système informatique de production comprend les étapes suivantes :
- l'envoi d'une séquence prédéfinie de données par paquets depuis le système informatique tâche vers le système informatique de production, des ports prédéterminés du système informatique de production étant fermés et la séquence adresse, dans un ordre prédéfini, un ou plusieurs ports prédéterminés du système informatique de production,
- la vérification de la conformité des séquences envoyées avec une séquence prédéfinie dans le système informatique de production ainsi que
- le démarrage du processus de transfert du fichier de description des tâches depuis le système informatique tâche vers le système informatique de production sur ordre du système informatique de production.

3. Procédé selon la revendication 1 ou 2, dans lequel le fichier de description des tâches est stocké avant son transfert vers le système informatique de production dans un répertoire d'échange prédéfini au sein de la structure de répertoire du système informatique tâche.

4. Procédé selon l'une quelconque des revendications 1 à 3, dans lequel le système informatique de production demande la taille du fichier de description des tâches avant le transfert du fichier de description des tâches depuis le système informatique tâche vers le système informatique de production, le fichier de description des tâches n'étant transféré vers le système informatique de production, qu'à condition que la taille du fichier ne dépasse pas une valeur limite prédéfinie.

5. Procédé selon l'une quelconque des revendications 1 à 4, dans lequel la création du fichier de description des tâches comprend un cryptage et / ou une signature des contenus du fichier de description des tâches, au moyen d'une clé d'un utilisateur du deuxième groupe d'utilisateurs.

6. Procédé selon la revendication 5, dans lequel l'authenticité d'un utilisateur du deuxième groupe d'utilisateurs est vérifiée par le système informatique de production, durant le contrôle de l'appartenance du fichier de description des tâches créé à au moins une tâche stockée dans le système informatique de production.

7. Procédé selon l'une quelconque des revendications 1 à 6, dans lequel la validité des paramètres de réalisation configurés est contrôlée avant d'exécuter une tâche assignée au fichier de description des tâches créé dans le système informatique de production, au moyen du fichier de description des tâches créé, et la tâche assignée n'est exécutée qu'à condition que les paramètres de réalisation configurés soient valides.

8. Procédé selon l'une quelconque des revendications 1 à 7, dans lequel il est impossible à un utilisateur du deuxième groupe d'utilisateurs d'accéder au système informatique de production, au moins dans un état de fonctionnement prédéfini du système informatique de production.

9. Procédé selon l'une quelconque des revendications 1 à 8, dans lequel il est impossible à un utilisateur du deuxième groupe d'utilisateurs d'accéder au système informatique tâche, au moins dans un état de fonctionnement prédéfini du système informatique tâche.

10. Système de traitement des données comprenant au moins :
- un système informatique clé,
- un système informatique tâche
- un système informatique de production,
dans lequel le système informatique tâche comprend un ou plusieurs fichiers de description des tâches prédéterminés,
chacun contenant une description d'une ou plusieurs tâches dans le système informatique de production, et
dans lequel le système informatique de production est configuré à gérer des actions prédéterminées, et contient une ou plusieurs tâches appartenant aux fichiers de description des tâches et dans lequel une tâche prédéfinie dans le système informatique de production peut être exécutée de manière contrôlée au moyen d'un transfert d'un fichier de description des tâches depuis le système informatique tâche vers le système informatique de production, et dans lequel le système informatique de production présente une première unité de contrôle d'accès et le système informatique tâche présente une deuxième unité de contrôle d'accès, qui sont configurées à permettre à un utilisateur d'un premier groupe d'utilisateurs d'accéder au système informatique tâche, tout en empêchant toutefois, au moins dans un état de fonctionnement prédéterminé du système informatique de production, un utilisateur du premier groupe d'utilisateurs d'accéder au système informatique de production, de sorte que le système informatique tâche présente des ports ouverts et que le système informatique de production maintienne en permanence tous les ports déterminants pour le procédé fermés de sorte qu'aucun programme ne fonctionne au niveau de ces ports aux fins d'adressabilité depuis l'extérieur ,
dans lequel, toutefois, un processus pour le transfert du fichier de description des tâches depuis le système informatique tâche vers le système informatique de production peut être démarré sur ordre du système informatique de production et le transfert du fichier de description des tâches peut être entraîné par le système informatique de production, le système informatique de production contrôlant le processus d'échange, et
dans lequel le système informatique clé est configuré à gérer des droits d'accès prédéterminés et/ou des clés d'utilisateurs d'un deuxième groupe d'utilisateurs et pour fournir une option de configuration en vue de configurer des paramètres de réalisation prédéfinis pour une tâche d'un système informatique de production, et dans lequel le système informatique clé présente une troisième unité de contrôle d'accès, qui est configurée à permettre à un utilisateur du deuxième groupe d'utilisateurs d'accéder au système informatique clé, tout en empêchant toutefois, au moins dans un état de fonctionnement prédéterminé du système informatique clé, un utilisateur du premier groupe d'utilisateurs d'accéder au système informatique clé.

11. Système de traitement des données selon la revendication 10, dans lequel la première et la seconde unité de contrôle d'accès sont configurées à empêcher au moins dans un état de fonctionnement prédéterminé du système informatique de production et / ou du système informatique tâche, un utilisateur du deuxième groupe d'utilisateurs d'accéder au système informatique de production et / ou au système informatique tâche.

12. Système de traitement des données selon la revendication 10 ou 11, dans lequel les systèmes informatiques correspondants sont configurés comme des serveurs.

13. Système de traitement des données selon l'une quelconque des revendications 10 à 12, dans lequel au moins le système informatique de production est une partie d'une infrastructure informatique en réseau sécurisée.
